# EUROPÄISCHE PATENTSCHRIFT

(11) **EP 2 839 494 B1**
(45) Veröffentlichungstag und Bekanntmachung des Hinweises auf die Patenterteilung: **10.05.2017**
(21) Anmeldenummer: 13713136.3
(22) Anmeldetag: 25.03.2013
(51) Int. Cl.: H01H 9/00, H01F 29/04, H02P 13/06

(54) **VERTEILTRANSFORMATOR ZUR SPANNUNGSREGELUNG VON ORTSNETZEN**
DISTRIBUTION TRANSFORMER FOR VOLTAGE REGULATION OF LOCAL DISTRIBUTION NETWORKS
TRANSFORMATEUR DE DISTRIBUTION POUR LA RÉGULATION DE TENSION DE RÉSEAUX PUBLICS

(30) Priorität: 20.04.2012 DE 102012103490
(43) Veröffentlichungstag der Anmeldung: 25.02.2015
(73) Patentinhaber: Maschinenfabrik Reinhausen GmbH, 93059 Regensburg (DE)
(72) Erfinder: BIERINGER, Alfred, 94333 Geiselhöring (DE); HAMMER, Christian, 93059 Regensburg (DE); PANKOFER, Martin, 94447 Plattling (DE); STREMPEL, Rolf, 93047 Regensburg (DE); STOCKER, Andreas, 93073 Neutraubling (DE)
(86) Internationale Anmeldenummer: PCT/EP2013/056219
(87) Internationale Veröffentlichungsnummer: WO 2013/156261

(56) Entgegenhaltungen:
- WO-A1-2004/088693
- WO-A1-2011/012181
- DE-C1- 4 237 165

## Beschreibung

Die Erfindung betrifft einen Verteiltransformator zur Spannungsregelung von Ortsnetzen. Solche Verteiltransformatoren werden in der Fachliteratur häufig auch als Ortsnetztransformatoren bezeichnet.

Klassischer Weise erfolgt die Spannungsregelung in Verteilsystemen bereits in der Mittelspannungsebene. Durch die zunehmende Etablierung regenerativer Energieerzeugungsmöglichkeiten ergeben sich stark veränderte Verhältnisse auf der - verbrauchernahen - Niederspannungsebene. Zum einen ist festzustellen, dass durch die Einspeisung regenerativer Energien an verbrauchernahen Punkten die Leistungsflüsse in den elektrischen Netzen je nach Einspeisesituation, d.h. je nachdem, ob mehr elektrische Energie entnommen oder regenerativ eingespeist wird, ihre Richtung ändern. Es ist also möglich, dass Energie damit jetzt auch in höher gelegene Netzebenen zurück gespeist wird. Zum anderen erfolgen die regenerativen Einspeisungen von Energie witterungsabhängig, besonders abhängig von den Windverhältnissen und dem Sonnenstand, oft sehr kurzfristig und in stark sich ändernder Höhe. Damit muss insgesamt mit erhöhten und kurzfristigen, früher nicht bekannten Spannungsschwankungen im Niederspannungsnetz gerechnet werden.

Bei den bisherigen klassischen Netzen wurden Verteiltransformatoren zur Kopplung der Mittel- und der Niederspannungsebene eingesetzt, die mit einem festen Übersetzungsverhältnis arbeiten. Die beschriebenen kurzfristigen und durchaus in ihrer Höhe erheblichen Spannungsschwankungen, die früher nicht zu verzeichnen waren, da damals keine regenerative Energieeinspeisung erfolgte, konnten und können durch solche ungeregelten Verteiltransformatoren nicht ausgeglichen werden. In der Folge kommt es jetzt bei solchen herkömmlichen Netzen dazu, dass die notwendige Spannungsqualität nicht mehr gesichert werden kann; es wird also erforderlich und zunehmend wichtig, auch in der Niederspannungsebene regelbare Verteiltransformatoren vorzusehen.

In der Veröffentlichung "Intelligente Systemlösungen für Verteilnetze", Maschinenfabrik Reinhausen GmbH, Druckimpressum 06/2011, sind diese Zusammenhänge erläutert. In dieser Veröffentlichung sind weiterhin zwei technische Möglichkeiten zur Regelung von - bisher ungeregelten - Verteiltransformatoren beschrieben:
Zum einen eine klassische Regelung durch einen Stufenschalter in Ölschalter-Technologie. Solche Stufenschalter werden beispielsweise von der Anmelderin unter der Bezeichnung OILTAP® vertrieben.
Zum anderen sind sog. hybride Aktoren vorgestellt, d.h. Stufenschalter, die sowohl mechanische Kontakte als auch Halbleiterschalter aufweisen. Mit beiden Ausführungsformen sind Verteiltransformatoren, die dazu natürlich eine gestufte Regelwicklung mit Wicklungsanzapfungen an einer Seite, vorzugsweise der Niederspannungsseite, aufweisen müssen, regelbar.

Die DE 10 2008 064 487 A1 beschreibt eine weitere Bauform eines derartigen regelbaren Verteiltransformators, wobei eine angeschlossene Stufenschalteinrichtung auf einem oder mehreren mechanischen Schaltern basiert. Nur bei der Umschaltung von einer Wicklungsanzapfung auf eine andere wird der Strom kurzzeitig über Halbleiterschaltelemente geführt, um die Unterbrechungsfreiheit zu sichern. Dies ist also ebenfalls eine Hybrid-Schalteinrichtung. D.h. Kombination von mechanischer und Halbleiter-Schalttechnologie.

Aus der DE 10 2009 014 243 A1 ist eine weitere Ausführungsform eines regelbaren Verteiltransformators bekannt, wobei hier mittels einer Schaltmatrix aus Leistungshalbleitern die Wicklungen der Primärseite kurzgeschlossen werden können oder mit einer gleichphasigen oder gegenphasigen Spannung durch schnelles Umschalten beaufschlagt werden können. Dabei bleibt die Ausgangsspannung während der Schaltvorgänge unterbrechungsfrei.

Die WO 2010/144805 A1 schließlich beschreibt noch einen andere regelbaren Verteiltransformator, der ausschließlich mit Halbleiterschaltelementen zur Umschaltung arbeitet. Dabei sind die Halbleiterschaltelemente und der komplette Solid-State Stufenschalter in einem besonderen taschenartig ausgebildeten Bereich an der Oberseite des Verteiltransformators angeordnet.

Jedes dieser Konzepte hat spezifische Vor- und Nachteile. Bei den Ausführungen mit Halbleiter-Bauelementen ist anzumerken, dass diese relativ temperaturempfindlich sind und zudem in aller Regel nicht direkt im Isolieröl des Verteiltransformators angeordnet werden können. Dadurch erhöht sich der konstruktive Aufwand bei derartigen Verteiltransformatoren. Aufgabe der Erfindung ist es, eine Lösung eines regelbaren Verteiltransformators anzugeben, der auf die bei Stufenschaltern bewährte Vakuumtechnik zurückgreift, d.h. als Schaltelemente bzw. Aktoren zur Umschaltung zwischen den verschiedenen Wicklungsanzapfungen auf der zu regelnden Seite des Verteiltransformators Vakuumschaltröhren verwendet.

Derartige Vakuumschaltröhren haben sich seit vielen Jahren bei den von der Anmelderin angebotenen Stufenschaltern, insbesondere der Typen VACUTAP® VV®, VACUTAP® VR®, VACUTAP® VM® bewährt. Sie sind jedoch auf Grund ihrer Bauweise und ihrer, bedingt durch die verwendeten großvolumigen Isolierzylinder, die den eigentlichen Stufenschalter aufnehmen, zur Anwendung an Verteiltransformatoren aus Platzgründen nicht geeignet. Funktionsbedingt lassen sich derartige bekannte Stufenschalter nach der Vakuumtechnologie, auch die anderer Hersteller, nicht einfach so verkleinern, dass sie für Verteiltransformatoren geeignet wären. Eine Verkleinerung scheitert u.a. schon daran, dass die bekannten gattungsgemäßen Stufenschalter mit Vakuumschaltröhren ausnahmslos einen Kraftspeicher mit einem Aufzugs- und einem Abtriebsteil aufweisen, wobei das Aufzugsteil von einer sich kontinuierlich drehenden Antriebswelle aufgezogen wird und das Abtriebsteil nach Erreichen des maximalen Aufzuges ausgelöst wird und sprungartig die eigentliche Lastumschaltung bewirkt. WO2011/012181 A1 offenbart die Anordnung eines Stufenschalters an einem Regeltransformator, wobei das mechanische Kontaktsystem des Stufenschalters oder auch dessen Lastumschalter innerhalb des Kessels des Transformators unterhalb des Transformatordeckels und oberhalb des Eisenjochs angeordnet sind. Die gestellte Aufgabe wird durch einen regelbaren Verteiltransformator mit den Merkmalen des ersten Patentanspruches gelöst. Die Unteransprüche betreffen besonders vorteilhafte Weiterbildungen der Erfindung.

Die allgemeine erfinderische Idee besteht darin, einen regelbaren Verteiltransformator mit einer Stufenregeleinrichtung vorzusehen, bei der sowohl die Wählerkontakteinheit, als auch die Schaltmittel zur unterbrechungslosen Lastumschaltung mittels eines gemeinsamen Motorantriebes ohne Zwischenschaltung eines Energiespeichers betätigbar sind. Indem der erfindungsgemäße Verteiltransformator bei der Stufenregeleinrichtung auf einen Energiespeicher verzichtet, ist er in seiner Bauweise derart kompakt, dass die sich bei klassischen Stufenschaltern bewährten Vakuumschaltröhren jetzt auch in Verteiltransformatoren Anwendung finden können.

Nach ein bevorzugten Ausführungsform wird dies dadurch erreicht, dass eine durch einen Motorantrieb erzeugte Drehbewegung mittels eines Getriebemoduls auf eine Gewindespindel übertragen wird, die in Eingriff mit einer an einem mittleren Gleitschlitten vorgesehenen Spindelmutter steht, so dass damit eine Längsverschiebung des mittleren Gleitschlittens entlang von Führungsstangen erzeugbar ist, während die übrigen Gleitschlitten mit dem mittleren Gleitschlitten über eine an der zweiten Seite einer Trägerplatte angeordnete, ebenfalls längsverschiebbare, an den mitteleren Gleitschlitten mechanisch gekoppelte Führungskulisse in Wirkverbindung stehen, so dass die übrigen Gleitschlitten ihrerseits mit dem mittleren Gleitschlitten über die Führungskulisse mechanisch gekoppelt sind, derart, dass damit gleichzeitig sowohl die Wählerkontakteinheit als auch die Schaltmittel zur unterbrechungslosen Lastumschaltung betätigbar sind. Es wird also von der Linearbewegung der Wählerkontakteinheit direkt die Betätigung der Vakuumschaltröhren abgeleitet

Nach einer weiteren bevorzugten Ausführungsform der Erfindung weist der Verteiltransformator ein an der Unterseite seines Deckels befestigtes Getriebemodul auf, das mit dem an der gegenüberliegenden Außenseite des Deckels angeordneten Motorantrieb zusammenwirkt. Das Getriebemodul weist hierfür ein flanschartiges Dichtmodul auf, das direkt an der Unterseite des Deckels angeordnet ist und mit dem Motorantrieb lösbar verbunden, insbesondere verschraubt, ist. An dem Getriebemodul ist zudem die gesamte Stufenregeleinrichtung des Verteiltransformators befestigt. Damit hat das Getriebemodul sowohl die Aufgabe, den Stufenregeleinrichtung zu halten, als auch mittels des Dichtmoduls gegenüber der Außenseite des Verteiltransformators abzudichten.

Nach einer weiteren bevorzugten Ausführungsform der Erfindung ist eine Trägerplatte aus einem dielektrischen Material, insbesondere einem Kunststoff, vorgesehen, an der auf einer ersten Seite die Wählerkontakteinheit und an einer zweiten Seite die Schaltmittel zur unterbrechungslosen Umschaltung angeordnet sind, derart, dass die Trägerplatte den für die Stufenregeleinrichtung notwendigen Erdabstand herstellt.

Nach einer nochmals weiteren Ausführungsform der Erfindung wird die mindestens eine Wählerkontakteinheit während einer Umschaltung entlang zweier im Wesentlichen parallel angeordneten Führungsstangen bewegt, die eine Linearführung der mindestens einen Wählerkontakteinheit sicherstellen und die von mehreren an der Trägerplatte angeordneten Traversen gehalten werden. Eine Wählerkontakteinheit umfasst dabei jeweils einen Gleitschlitten sowie einen Kontaktträger zur Aufnahme der beweglichen Wählerkontakte, die mit den festen Wählerkontakten zusammenwirken.

Nach einer wiederum weiteren Ausführungsform der Erfindung werden die beweglichen Wählerkontakte jeweils in einem Kontaktträger aufgenommen und wirken mit an der Trägerplatte angeordneten festen Wählerkontakten zusammen, derart, dass die einzelnen festen Wählerkontakte durch eine Längsverschiebung der beweglichen Wählerkontakte samt Gleitschlitten, also der Wählerkontakteinheit, entlang der Führungsstange beschaltbar sind. Durch die Hin- und/oder Herbewegung der Wählerkontakteinheit werden die einzelnen festen Wählerkontakte beschaltet und damit der Regelbereich der Stufenregeleinrichtung durchlaufen. Auf besonders einfache Weise bilden die mehreren Traversen, an denen die Führungsstangen gehalten werden, einen mechanischen Anschlag für die längs verfahrbaren beweglichen Wählerkontakte, so dass damit der Regelbereich auch mechanisch begrenzt wird.

Nach einer nochmals weiteren bevorzugten Ausführungsform sind die Schaltmittel zur unterbrechungslosen Umschaltung direkt an dem jeweiligen Gleitschlitten der entsprechenden Wählerkontakteinheit angeordnet. Auch bei dieser Ausführungsform werden die Schaltmittel zur unterbrechungslosen Umschaltung, als auch die Wählerkontakteinheit von einem gemeinsamen Motorantrieb ohne Zwischenschaltung eines Energiespeichers betrieben, indem der Motorantrieb mittels eines Umlenkgetriebes eine zentrale Gewindespindel antreibt, die ihrerseits wiederum die Drehbewegung in eine Längsverschiebung der Gleitschlitten umwandelt, derart, dass dadurch sowohl die beweglichen Wählerkontakte als auch die an der Wählerkontakteinheit angeordneten Schaltmittel zur unterbrechungslosen Umschaltung der Stufenregeleinrichtung des Verteiltransformators betätigbar sind.

Nach einer wiederum weiteren bevorzugten Ausführungsform der Erfindung wird von dem Motorantrieb sowohl eine Gewindespindel angetrieben, die ihrerseits mit der Wählerkontakteinheit in Wirkverbindung steht, als auch eine Nockenwelle, mittels der die Schaltmittel zur unterbrechungslosen Umschaltung betätigbar sind. Dies ermöglicht auf besonders vorteilhafte Weise eine einfache unabhängige Betätigung der Wählerkontakteinheit von den Schaltmitteln zur unterbrechungslosen Umschaltung der Stufenregeleinrichtung des Verteiltransformators.

Nachfolgend sind die Erfindung und ihre Vorteile unter Bezugnahme auf die beigefügten Zeichnungen ausführlicher beschrieben. Es zeigen:
- Fig. 1a: eine schematische Darstellung eines erfindungsgemäßen Verteiltransformators mit Stufenregeleinrichtung;
- Fig. 1b: eine schematische Perspektivansicht des erfindungsgemäßen Verteiltransformators;
- Fig. 1c: ein schematisiertes Schaltbild eines erfindungsgemäßen Verteiltransformators mit Stufenregeleinrichtung;
- Fig. 2a: eine erste seitliche Perspektivansicht des Verteiltransformators nach Figur 1, an der die Wählerkontakte angeordnet sind;
- Fig. 2b: eine zweite seitliche Perspektivansicht des Verteiltransformators nach Figur, an der die Schaltmittel zur unterbrechungslosen Lastumschaltung angeordnet sind;
- Fig. 3: eine Detailansicht der Führungsstangen eines erfindungsgemäßen Verteiltransformators;
- Fig. 4a: eine weitere Detailansicht der Wählerkontakteinheit eines erfindungsgemäßen Verteiltransformators;
- Fig. 4b: eine nochmals weitere Detailansicht der Wählerkontakteinheit eines erfindungsgemäßen Verteiltransformators;
- Figur 5: eine Kontaktleiste eines erfindungsgemäßen Verteiltransformators
- Figur 6a: eine seitliche Perspektivansicht einer weiteren Ausführungsform eines erfindungsgemäßen Verteiltransformators
- Figur 6b: eine Detailansicht der seitlichen Perspektivansicht nach Figur 6a
- Figur 7a: eine erste seitliche Perspektivansicht einer nochmals weiteren Ausführungsform eines erfindungsgemäßen Verteiltransformators
- Figur 7b: eine zweite seitliche Perspektivansicht der nochmals weiteren Ausführungsform nach Figur 7a.

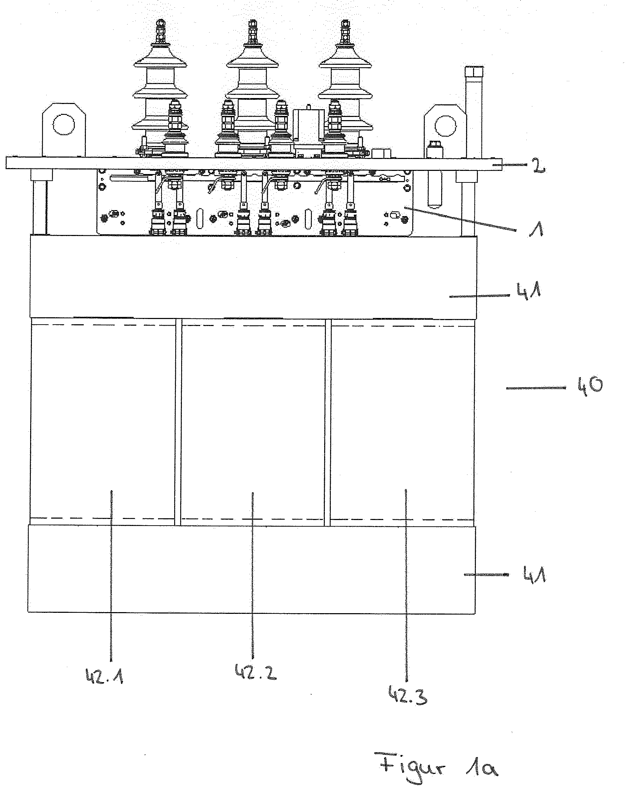

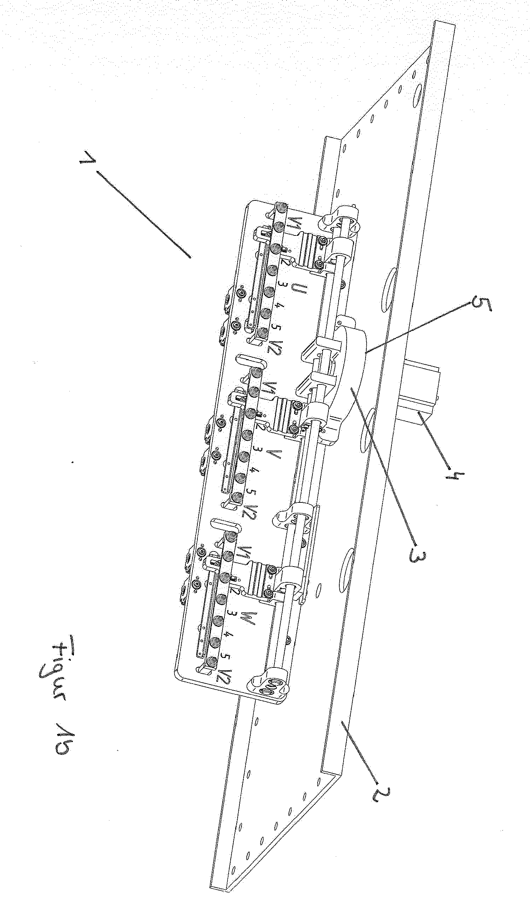

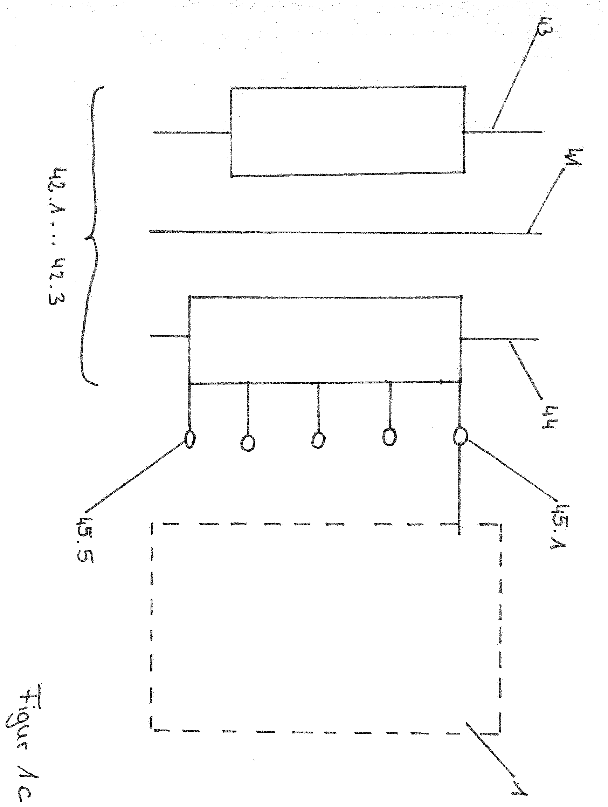

In den Figuren 1a, 1b und 1c ist eine Stufenregeleinrichtung 1 im Zusammenwirken mit einem erfindungsgemäßen Verteiltransformators 40 gezeigt, die direkt unterhalb eines Tranformatordeckels 2 des Verteiltransformators 40 angeordnet ist. Ein derartiger regelbarer Verteiltransformator 40, umfasst einen mit Isolieröl befüllten Transformatorkessel, in dem an einem Eisenjoch 41 wenigstens eine Wicklung 42.1...42.3 angeordnet ist. Diese Wicklung 42.1...42.3 unterteilt sich bei einem regelbaren Verteiltransformator 40 in eine Stammwicklung 43 und eine Regelwicklung 44, an der mehrere Wicklungsanzapfungen 45.1...45.5 vorgesehen sind, die den Regelbereich bilden. An der Regelwicklung 44 wiederum ist die Stufenregeleinrichtung 1 angeordnet. Die Stufenregeleinrichtung 1 weist ein an der Unterseite des Transformatordeckels 2 befestigtes Getriebemodul 3 auf, das mit einem an der gegenüberliegenden Außenseite des Transformatordeckels 2 angeordneten Motorantrieb 4 zusammenwirkt. Der Motorantrieb 4 kann dabei beispielsweise als handelsüblicher Schrittmotor ausgebildet sein. Das Getriebemodul 3 umfasst ein flanschartiges Dichtmodul 5, das direkt an der Unterseite des Transformatordeckels 2 angeordnet ist und mit dem Motorantrieb 4 lösbar verbunden, insbesondere verschraubt, ist. An dem Getriebemodul 3 ist damit die gesamte Stufenregeleinrichtung 1 des Verteiltransformators befestigt. Das Getriebemodul 3 erfüllt sowohl die Aufgabe, die Stufenregeleinrichtung 1 zu halten, als auch mittels des Dichtmoduls 5 gegenüber der Außenseite des Verteiltransformators hermetisch abzudichten.

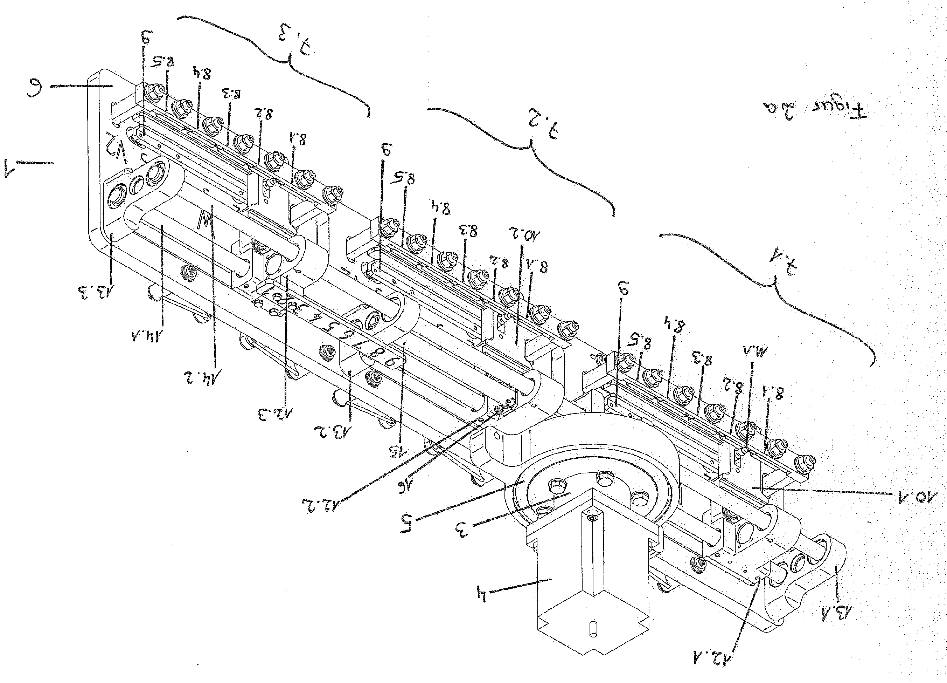

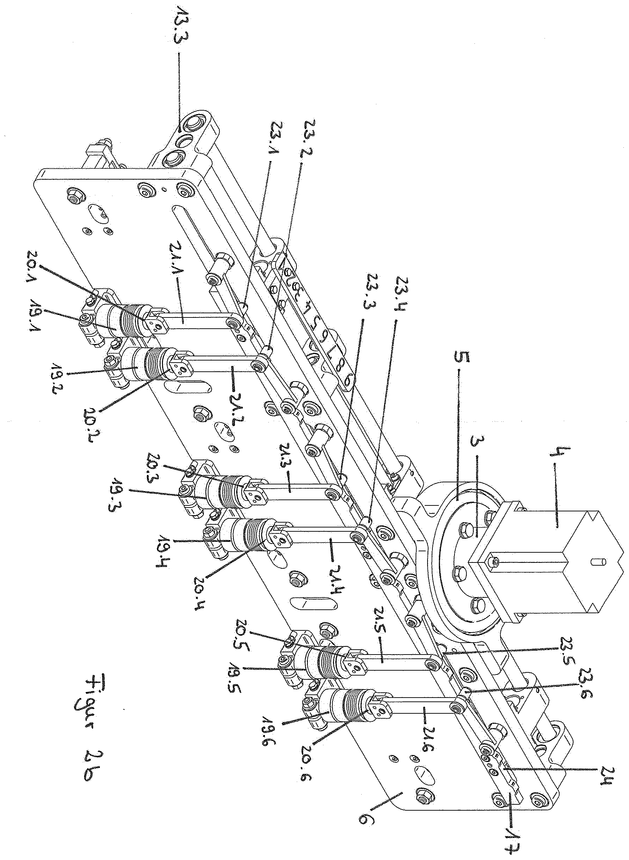

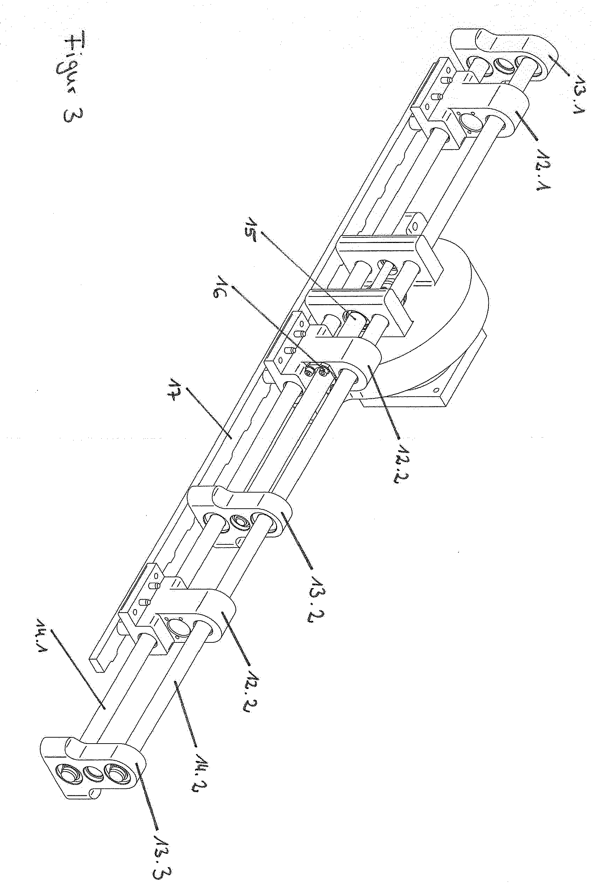

Die Figuren 2a und 2b zeigt die Stufenregeleinrichtung 1 des erfindungsgemäßen Verteiltransformators in zwei unterschiedlichen perspektivischen Seitenansichten. Mit dem Getriebemodul 3 mechanisch verbunden ist eine Trägerplatte 6 aus dielektrischem Material, an der die einzelnen Baugruppen der Stufenregeleinrichtung 1 befestigbar sind. Die Trägerplatte 6 ist dabei aus elektrisch isolierendem Material gefertigt und dazu ausgebildet, alle wesentlichen Bauteile der Stufenregeleinrichtung 1 aufzunehmen. Die Figur 2a zeigt dabei die erste Seite der Stufenregeleinrichtung 1 des erfindungsgemäßen Verteiltransformtors, an der die Baugruppen der wenigstens einen Wählerkontakteinheit 7.1, 7.2 und 7.3 an der Trägerplatte 6 befestigt sind. In der Abbildung der Figur 2a gibt es beispielhaft drei Wählerkontakteinheiten 7.1, 7.2 und 7.3; eine jede Wählerkontakteinheit 7.1, 7.2 und 7.3 ist dabei mit einer separaten Phase, also Wicklung 42.1 .... 42.3, des erfindungsgemäßen Verteiltransformators verbunden. Eine jede Wählerkontakteinheit 7.1...7.3 umfasst jeweils mehrere beschaltbare feste Wählerkontakte 8.1...8.5, die elektrisch mit den Wicklungsanzapfungen der Regelwicklung 44 des Verteiltransformators verbunden sind, eine mit einer Lastableitung LA verbundene Kontaktschiene 9 sowie einen Kontaktträger 10.1 ... 10.3 mit jeweils zwei federnd gelagerten, beweglichen Wählerkontakten 11.1 und 11.2. Abhängig vom Umschaltprinzip, also nach dem Reaktor- oder Widerstandsschnellschalt-Prinzip, sind dabei Mittelstellungen, in denen der eine bewegliche Wählerkontakt, beispielsweise der bewegliche Wählerkontakt 11.1, den ersten festen Wählerkontakt, beispielweise den festen Wählerkontakt 8.1, und der andere bewegliche Wählerkontakt, beispielsweise der bewegliche Wählerkontakt 11.2, den zum ersten festen Wählerkontakt benachbarten zweiten festen Wählerkontakt, beispielsweise den festen Wählerkontakt 8.2, beschaltet, als stationäre Betriebsstellung der Stufenregeleinrichtung 1 zulässig. Damit sind nach dem Rekatorschaltprinzip bei hier 5 dargestellten festen Wählerkontakten 8.1...8.5 neun stationäre Betriebsstellungen möglich, während es bei einer Stufenregeleinrichtung 1 nach dem Widerstandschnellschalt-Prinzip, bei dem keine Mittelstellungen zulässig sind, nur 5 stationäre Betriebsstellungen gibt. Der Kontaktträger 10.1 ... 10.3 einer jeden Phase ist dabei an einem Gleitschlitten 12.1 ... 12.3 mechanisch fixiert und bildet zusammen mit diesem eine bauliche Einheit. Aufgenommen wird der Gleitschlitten 12.1 ... 12.3 an zwei parallel angeordneten, an der Trägerplatte 6 mittels mehreren Traversen 13.1... 13.3 fixierten, Führungsstangen 14.1 und 14.2, derart, dass die einzelnen festen Wählerkontakte 8.1 ... 8.5 durch eine Längsverschiebung der beweglichen Kontakte 11.1 ... 11.3 samt Gleitschlitten 12.1 .... 12.3 entlang der Führungsstangen 14.1 ...14.2 beschaltbar sind. Hierfür wird eine durch den Motorantrieb 4 erzeugte Drehbewegung mittels des Getriebemoduls 3 auf eine Gewindespindel 15 übertragen, die in Eingriff mit einer an dem mittleren Gleitschlitten 12.2 vorgesehenen Spindelmutter 16 steht, so dass damit eine Längsverschiebung des mittleren Gleitschlittens 12.2 entlang der Führungsstangen 14.1 und 14.2. erzeugbar ist. Die übrigen Gleitschlitten 12.1 und 12.3 stehen mit dem mittleren Gleitschlitten 12.2 über eine an der zweiten Seite der Trägerplatte 6 angeordnete, ebenfalls längsverschiebbaren Führungskulisse 17, in Wirkverbindung, indem die Gleitschlitten 12.1 und 12.3 mit dem Gleitschlitten 12.2 über die Führungskulisse 17 mechanisch gekoppelt sind. Eine genauere Beschreibung dieser mechanischen Zwangsführung der Gleitschlitten 12.1 und 12.3 mittels des Gleitschlittens 12.2 ist der unten stehenden Figurenbeschreibung zu Figur 3 entnehmbar. Die mehreren Traversen 13.1 ... 13.3, an denen die Führungsstangen 14.1 und 14.2 gehalten werden, bilden zudem einen mechanischen Anschlag für die längs verfahrbaren beweglichen Kontakte 10.1 .... 10.3 samt Gleitschlitten 12.1 ...12.3, so dass damit der Regelbereich der Stufenregeleinrichtung 1 auch mechanisch begrenzt ist.

Die Figur 2b zeigt dabei die zweite Seite der Trägerplatte 6 der Stufenregeleinrichtung 1 des erfindungsgemäßen Verteiltransformators, an der die Schaltmittel zur unterbrechungslosen Umschaltung angeordnet sind. Bei den Schaltmitteln zur unterbrechungslosen Umschaltung handelt es sich bei der Ausführungsform der Figur 2b um Vakuumschaltröhren 19.1... 19.6, wobei jeweils zwei Vakuumschaltröhren 19.1 und 19.2, bzw. 19.3 und 19.4, bzw. 19.5 und 19.6 jeweils einer Phase der Stufenregeleinrichtung 1 zugeordnet sind und mit einer entsprechenden Wählerkontakteinheit 7.1...7.3 zusammenwirken. Bei den Vakuumschaltröhren 19.1...19.6 handelt es sich um aus dem Stand der Technik bekannte Schaltmittel mit einem beweglichen Schaltkontakt 20.1...20.6 sowie einem nicht näher dargestellten Festkontakt 18.1...18.6. Jede der Vakuumschaltröhren 19.1 ... 19.6 umfasst dabei einen beweglichen Schaltkontakt 20.1...20.6, der jeweils mit einem Koppelglied 21.1...21.6 und einem Steuerhebel 22.1...22.6 gelenkig an der zweiten Seite der Trägerplatte 6 angeordnet ist. An der gelenkigen Verbindung zwischen dem entsprechenden Koppelglied 21.1... 21...6 und dem Steuerhebel 22.1...22.6 ist jeweils auf der der Trägerplatte 6 zugewandten Seite eine drehbar gelagerte Rolle 23.1...23.6 vorgesehen, die sich partiell kontaktschlüssig an der Oberseite 24 der Führungskulisse 17 entlangrollt. Die Oberseite 24 der Führungskulisse 17 weist dabei eine Profilierung in Form von Nocken auf, so dass die Vakuumschaltröhren 19.1...19.6 durch eine Längsverschiebung der Führungskulisse 17 abhängig von der Profilierung der Oberseite 24 der Führungskulisse 17 beschaltet, d. h. geöffnet bzw. geschlossen werden können.

Figur 3 zeigt eine vereinfachte Detailansicht der mechanischen Kopplung der Gleitschlitten 12.1...12.3 mit der Führungskulisse 17. Es ist das Getriebemodul 3 gezeigt, das über hier nicht näher dargestellte Zahnräder eine Drehbewegung auf die Gewindespindel 15 überträgt, die ihrerseits die Drehbewegung auf eine in dem mittleren Gleitschlitten 12.2 vorgesehene Spindelmutter 16 weitergibt, so dass die Drehbewegung der Gewindespindel 15 in eine Längsbewegung des mittleren Gleitschlittens 12.2 entlang der Führungsstangen 14.1 und 14.2 umgewandelt wird. Indem die Gleitschlitten 12.1...12.3 untereinander mittels der Führungskulisse 17 mechanisch gekoppelt sind, wird letzen Endes durch eine Längsverschiebung des mittleren Gleitschlittens 12.2 entlang der Führungsstangen 14.1 und 14.2 auch eine Längsschiebung der beiden übrigen Gleitschlitten 12.1 und 12.3 bewirkt.

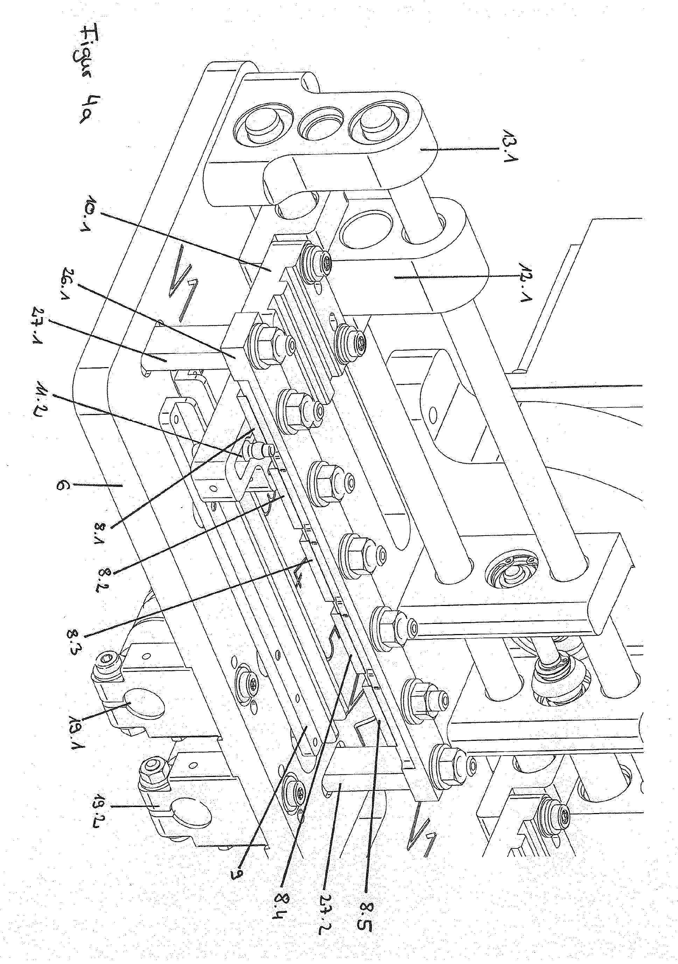

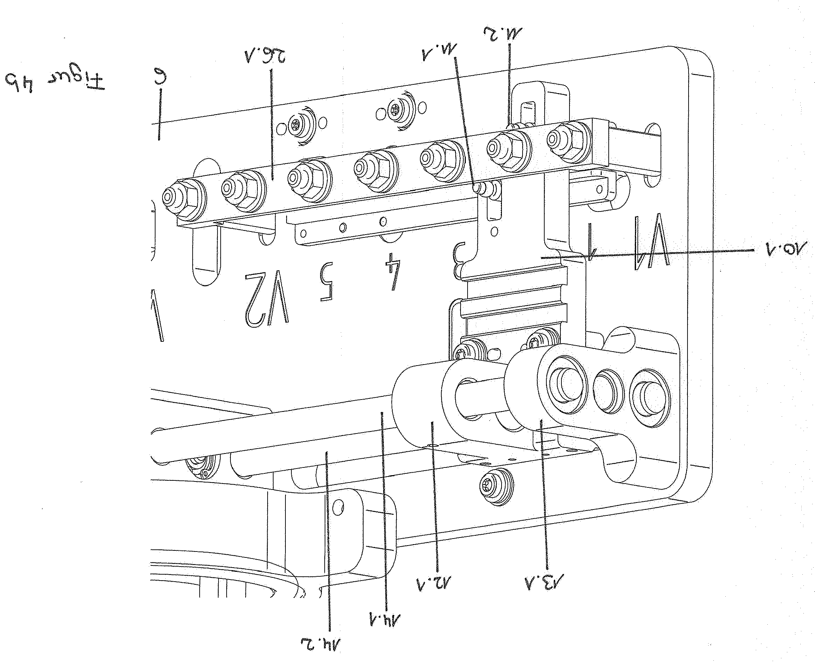

Die Figuren 4a und 4b zeigen in zwei unterschiedlichen Perspektiven eine weitere Detailansicht der Wählerkontakteinheit 7.1 einer Phase der Stufenregeleinrichtung 1 und erläutert diese beispielhaft; die Wählerkontakteinheiten 7.2 und 7.3 sind identisch aufgebaut. Daher gelten die nachfolgenden Erklärungen auch für diese Wählerkontakteinheiten 7.2 und 7.3. Die festen Wählerkontakte 8.1...8.5 sind dabei an einer Kontaktleiste 25.1 aus Kunststoff angeordnet, beispielsweise mittels einer hier dargestellten Schraubverbindung. An der Trägerplatte 6 ist die Kontaktleiste 25.1 mittels jeweils zwei Abstandhaltern 27.1...27.2 befestigt, die als Anschluss einer nicht dargestellten Überschaltdrossel bzw. eines Überschaltwiderstandes genutzt werden. Überschaltdrosseln sind nach dem Reaktorschaltprinzip und Überschaltwiderstände nach dem Widerstandsschnellschaltprinzip vorzusehen. Zudem weist die Kontaktleiste 25.1 an ihrer Längsseite eine Steuerkulisse 26.1 auf, an der beidseitig mehrere Nocken 28.1...28.4 angeordnet sind, um die federnd gelagerten Wählerkontakte 11.1 und 11.2 der entsprechenden Wählerkontakteinheit 7.1 bei einer Längsverschiebung des korrespondieren Gleitschlittens 12.1 mittels der an der Steuerkulisse 26.1 vorgesehenen Nocken 28.1...28.4 vertikal zu bewegen, abhängig von der Kontur der mehreren Nocken 28.1...28.4. Die Kontur der Nocken 28.1...28.4 ist dabei so bemessen, dass die beweglichen Wählerkontakte 11.1 und 11.2 der Wählerkontakteinheit 7.1 zwischen zwei benachbarten festen Wählerkontakten 8.1...8.5 von dem aktuell beschalteten festen Wählerkontakt, hier 8.1, abheben, nachdem sie nach vollzogener Umschaltung den nächsten festen Wählerkontakt, hier 8.2, wieder beschalten. Wobei eine Mittelstellung der beweglichen Wählerkontakte 11.1 und 11.2 auf zwei benachbarten festen Wählerkontakten 8.1 ... 8.5 nach dem Reaktorschaltprinzip zulässig ist, während nach dem Widerstandsschnellschaltprinzip auf den nächsten benachbarten festen Wählerkontakt weitergeschaltet wird. Zur definierten Kontaktgabe sind die Kontaktstücke 11.1 und 11.2 an der eigentlichen Kontaktfläche ballig ausgebildet.

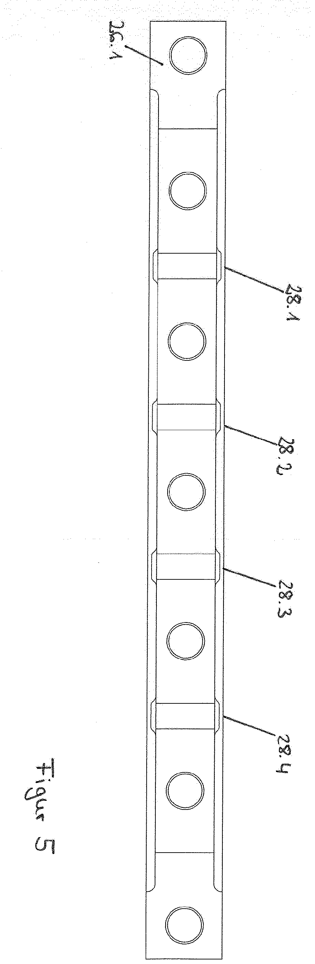

Figur 5 zeigt die Kontaktleiste 25.1... 25.3 mit der Steuerkulisse 26.1...26.3 und den jeweils mehreren Nocken 28.1...28.4 in einer Detaildarstellung, mittels denen sich die entsprechenden beweglichen Wählerkontakte 11.1 und 11.2, bzw. 11.3 und 11.4, bzw. 11.5 und 11.6, einer jeden Wählerkontakteinheit 7.1 ... 7.3 während eines Umschaltvorgangs, abhängig von der Konturierung der Nocken 28.1 ... 28.4, vertikal verschieben.

Im eingebauten Zustand der Stufenregeleinrichtung 1 in dem erfindungsgemäßen Verteiltransformator sind die beweglichen Schaltkontakte 20.1...20.6 der Vakuumschaltröhren 19.1...19.6 elektrisch mit den der jeweiligen Phase zugehörigen Abstandshaltern 27.1...27.2 und damit letzten Endes mit der entsprechenden Überschaltdrosseln bzw. Überschaltwiderständen verbunden, während der entsprechende Festkontakt 18.1...18.6 der korrespondierenden Vakuumschaltröhre 19.1...19.6 mit der Kontaktschiene 9 der dazugehörigen Phase elektrisch verschaltet wird. Grundsätzlich wäre es jedoch auch denkbar, die elektrische Verschaltung der Stufenregeleinrichtung 1 mit dem erfindungsgemäßen Verteiltransformator in genau entgegengesetzter Art und Weise zu dem eben Beschriebenen vorzunehmen.

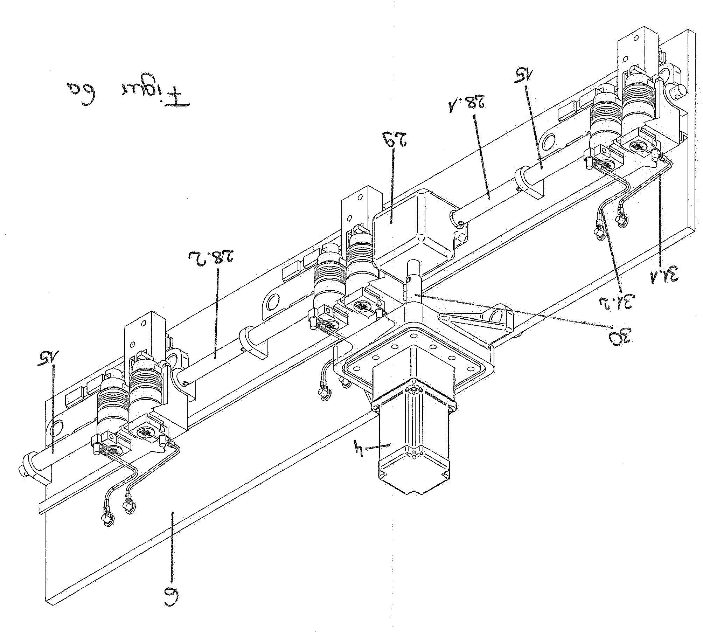

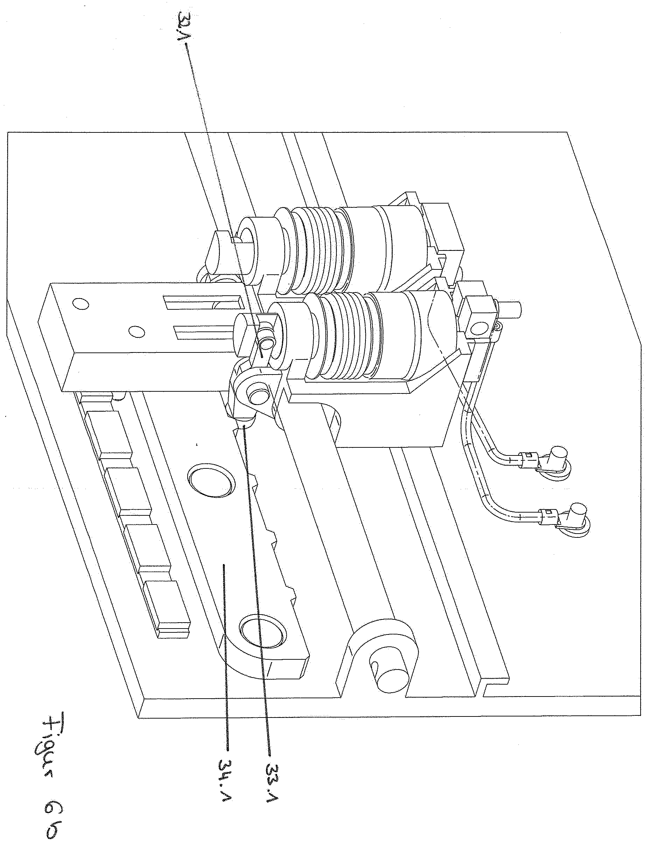

In den Figuren 6a und 6b ist eine weitere Ausführungsform einer der Stufenregeleinrichtung 1 für einen erfindungsgemäßen Verteiltransformator gezeigt. In der Figurenbeschreibung wird sich darauf beschränkt, die Unterschiede zu den voranstehenden Figuren zu erläutern, wobei identische Bauteile mit den selben Bezugszeichen wie in den Figuren 1 bis 5 angesprochen werden. Bei dieser Ausführungsform der Stufenregeleinrichtung 1 sind die Schaltmittel zur unterbrechungslosen Umschaltung, also die Vakuumschaltröhren 19.1...19.6, direkt an dem entsprechenden Gleitschlitten 12.1...12.3 der jeweiligen Wählerkontakteinheit 7.1 ... 7.3 angeordnet und samt diesem entlang der Gewindespindel 15 verfahrbar ausgebildet. Eine jede Wählerkontakteinheit 7.1...7.3 hat bei dieser Ausführungsform ihre eigene, in dieser Darstellung nicht sichtbare, Spindelmutter 16 in dem entsprechenden Gleitschlitten 12.1 ... 12. 3 angeordnet, so dass die Wählerkontakteinheiten 7.1 ...7.3 damit entlang der Gewindespindel 15 synchron verschiebbar ausgebildet sind. Die Gewindespindel 15 ist aus mehreren Teilstücken zusammengebaut und weist zwischen den entsprechenden Teilstücken jeweils ein aus elektrisch isolierendem Material geformtes Kupplungsrohr 28.1...28.2 auf. Zudem ist ein Winkelgetriebe 29 vorgesehen, um die Drehbewegung des Motorantriebs 3 auf die Gewindespindel 15 weiterzugeben. Zwischen dem Motorantrieb 3 und dem Winkelgetriebe 29 ist eine Isolierwelle 30 aus dielektrischem Material angeordnet, die die Drehbewegung des Motorantriebs 3 in das Winkelgetriebe 29 einleitet. Die Festkontakte 18.1....18.6 der an dem entsprechenden Gleitschlitten 12.1...12.3 angeordneten Vakuumschaltröhren 19.1...19.6 sind jeweils mittels Litzen 31.1....31.6 an der Trägerplatte 6 verschraubt und mit nicht dargestellten Überschaltdrosseln bzw. Überschaltwiderständen elektrisch verbunden. Die beweglichen Schaltkontakte 20.1...20.6 der Vakuumschaltröhren 19.1...19.6 stehen mit einer Kipphebelanordnung 32.1...32.6 in mechanischer Wirkverbindung, die jeweils eine Rolle 33.1...33.6 aufweisen. In eingebautem Zustand der Stufenregeleinrichtung 1 sind die beweglichen Schaltkontakte 20.1...20.6 der Vakuumschaltröhren 19.1....19.6 mit den beweglichen Wählerkontakten 11.1...11.2 der zugehörigen Phase elektrisch verbunden. Die entsprechenden Rollen 33.1...33.6 wälzen sich bei einer Längsverschiebung des Gleitschlittens 12.1...12.3 an der Profilierung einer Kulissenschiene 34.1...34.3 entlang, so dass damit die jeweilige Kipphebelanordnung 32.1...32.6 den entsprechenden beweglichen Schaltkontakt 20.1...20.6 der dazugehörigen Vakuumschaltröhre 19.1....19.6 abhängig von der Profilierung der Kulissenschiene 34.1...34.3 beschaltet, d.h. öffnet oder schließt. Die festen Wählerkontakte 8.1...8.5, von denen man in dieser Darstellung nur die festen Wählerkontakte 8.3...8.5 sieht, sind hier direkt an der Trägerplatte 6 angeordnet und auf der hier nicht dargestellten, gegenüberliegenden Seite, der Trägerplatte 6 elektrisch mit den entsprechenden Wicklungsanzapfungen der Regelwicklung des Verteiltransformators verbunden.

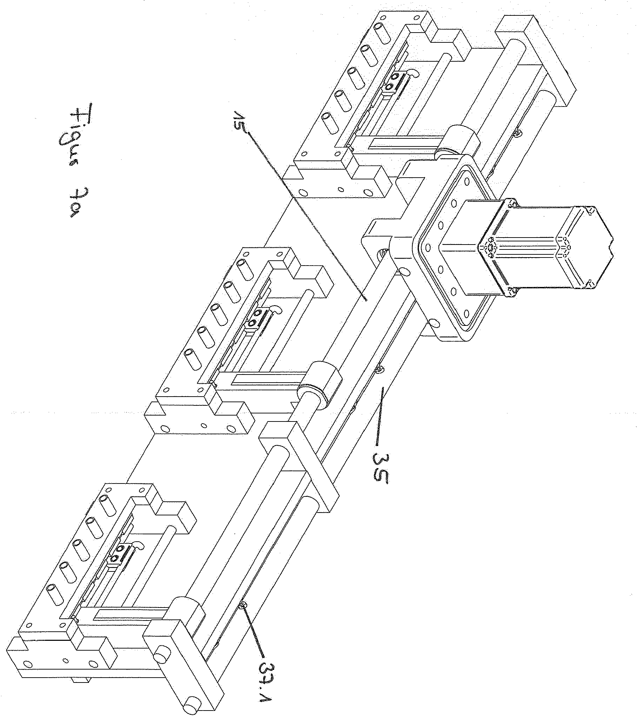

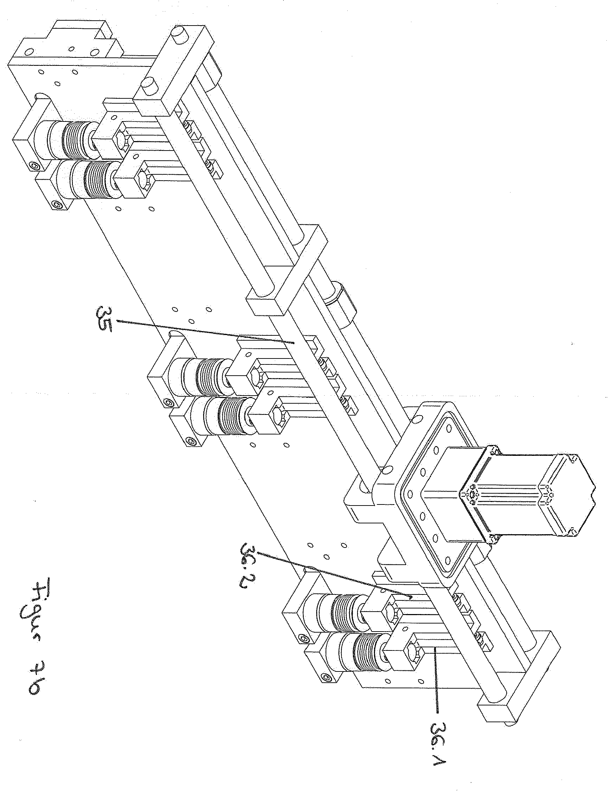

In den Figuren 7a und 7b ist eine nochmals weitere Ausführungsform einer Stufenregeleinrichtung 1 für einen Verteiltransformator gezeigt. Auch bei dieser Figurenbeschreibung wird sich darauf beschränkt, die Unterschiede zu den voranstehenden Figuren zu erläutern, wobei identische Bauteile mit den selben Bezugszeichen wie in den Figuren 1 bis 5 angesprochen werden. In der Ausführungsform der Figuren 7a und 7b wird von dem Motorantrieb 3 sowohl eine Gewindespindel 15 angetrieben, die ihrerseits mit jeder der Wählerkontakteinheiten 7.1...7.3 in mechanischer Wirkverbindung steht, als auch eine Nockenwelle 35, mittels der die Schaltmittel zur unterbrechungslosen Umschaltung, also die Vakuumschaltröhren 19.1... 19.6, betätigbar sind. Entgegen der Darstellung der Figuren 6a und 6b ist die Gewindespindel 15 hier über deren gesamte Länge als Gewindespindel ausgebildet und wird mit der in jedem der Gleitschlitten 12.1... 12.3 vorgesehenen Spindelmutter 16 in Eingriff gebracht, derart, dass bei einer Drehung der Gewindespindel 15 ein jeder Gleitschlitten 12.1...12.3 horizontal verfährt. Die übrige Wählerkontakteinheit 7.1...7.3 ist identisch zu der in Figuren 1 bis 5 beschriebenen Wählerkontakteinheit 7.1...7.3 aufgebaut. Zur Betätigung der Vakuumschaltröhren 19.1...19.6 ist jeder bewegliche Schaltkontakt 20.1....20.6 mit einer Hubstange 36.1...36.6 mechanisch zwangsgekoppelt, die mit, auf der den beweglichen Schaltkontakten 20.1...20.6 gegenüberliegend, an der Nockenwelle 35 angeordneten, Steuernocken 37.1...37.6 zusammenwirkt, derart, dass bei einer Drehung der Nockenwelle 35 die Steuernocken 37.1...37.6 auf die korrespondierende Hubstange 36.1... 36.6 eine Vertikalbewegung einleitet und damit letzten Endes den dazugehörigen beweglichen Schaltkontakt 20.1...20.6 der entsprechenden Vakuumschaltröhren 19.1...19.6 betätigt. Abhängig von der der Stufenregeleinrichtung 1 zu Grunde liegenden Schaltsequenz sind dabei am Umfang der Nockenwelle 35 mehrere Steuernocken 37.1...37.6 je Vakuumschaltröhre 19.1...19.6 vorgesehen.

Zusammenfassend lässt sich feststellen, dass die Stufenregeleinrichtung 1 damit sowohl nach dem Reaktorschaltprinzip, als auch nach dem Widerstandsschnellschaltprinzip einsetzbar ist. Abhängig vom zu Grunde liegenden Umschaltprinzip sind bei hier 5 dargestellten festen Wählerkontakten 8.1...8.5 nach dem Reaktorschaltprinzip 9 stationäre Betriebsstellungen zulässig, während bei einer nach dem Widerstandsschnellschaltprinzip aufgebauten Stufenregeleinrichtung 1 lediglich 5 stationäre Betriebsstellungen zulässig sind.

### Bezugszeichenliste

- 1: Stufenregeleinrichtung
- 2: Transformatordeckel
- 3: Getriebemodul
- 4: Motorantrieb
- 5: Dichtmodul
- 6: Trägerplatte
- 7.1 ... 7.3: Wählerkontakteinheit
- 8.1 ... 8.5: feste Wählerkontakte
- 9: Kontaktschiene
- 10.1 ... 10.3: Kontaktträger
- 11.1, 11.2: bewegliche Wählerkontakte
- 12.1 ... 12.3: Gleitschlitten
- 13.1 ... 13.3: Traversen
- 14.1, 14.2: Führungsstangen
- 15: Gewindespindel
- 16: Spindelmutter
- 17: Führungskulisse
- 18.1...18.6: Festkontakte
- 19.1 ... 19.6: Vakuumschaltröhre
- 20.1 ... 20.6: bewegliche Schaltkontakte
- 21.1 ... 21.6: Koppelglieder
- 22.1 ... 22.6: Steuerhebel
- 23.1 ... 23.6: Rolle
- 24: Oberseite Führungskulisse
- 25.1 ... 25.3: Kontaktleiste
- 26.1 ... 26.3: Steuerkulisse
- 27.1...27.2: Abstandshalter
- 28.1...28.2: Kupplungsrohr
- 29: Winkelgetriebe
- 30: Isolierwelle
- 31.1 ... 31.6: Litze
- 32.1 ... 32.6: Kipphebelanordnung
- 33.1 ... 33.6: Rollen
- 34.1 ... 34.3: Kulissenschiene
- 35: Nockenwelle
- 36.1...36.6: Hubstange
- 37.1...37.6: Steuernocken
- 40: Verteiltransformator
- 41: Eisenjoch
- 42.1...42.3: Wicklung
- 43: Stammwicklung
- 44: Regelwicklung
- 45.1...45.5: Wicklungsanzapfungen

## Patentansprüche

1. Verteiltransformator (40) zur Spannungsregelung von Ortsnetzen, aufweisend
- eine Stammwicklung (43) und eine Regelwicklung (44) mit mehreren Wicklungsanzapfungen,
- eine Stufenregeleinrichtung (1) zur unterbrechungslosen Umschaltung zwischen verschiedenen Wicklungsanzapfungen der Regelwicklung (44) des Verteiltransformators (40),
- ein Getriebemodul (3);
- einen Motorantrieb (4) zur Einleitung einer Antriebsbewegung über das Getriebemodul (3) in die Stufenregeleinrichtung (1);
- zur unterbrechungslosen Umschaltung für jede Phase zwei Vakuumschaltröhren (19.1, 19.2 bzw. 19.3, 19.4 bzw. 19.5, 19.6);
wobei
- mindestens eine Wählerkontakteinheit (7.1...7.3) mit jeweils mehreren festen Wählerkontakten (8.1...8.5), die jeweils mit den einzelnen Wicklungsanzapfungen elektrisch in Verbindung stehen, längs einer Linie angeordnet ist,
- die festen Wählerkontakte (8.1...8.5) durch zwei längs verschiebbare bewegliche Wählerkontakte (11.1, 11.2) betätigbar sind,
- die gesamte Stufenregeleinrichtung (1) mittels des Getriebemoduls (3) an der Unterseite eines Transformatordeckels (2) angeordnet ist,
- die mindestens eine Wählerkontakteinheit (7.1...7.3) und die Vakuumschaltröhren (19.1...19.6) mittels des gemeinsamen Motorantriebes (4) direkt betätigbar sind, derart, dass die Einleitung der Antriebbewegung des Motorantriebes (4) auf die mindestens eine Wählerkontakteinheit (7.1...7.3) und die Vakuumschaltröhren (19.1...19.6) ohne Zwischenschaltung eines mechanischen Energiespeichers erfolgt.

2. Verteiltransformator nach dem vorigen Anspruch, wobei
- eine durch den Motorantrieb (4) erzeugte Drehbewegung mittels eines Getriebemoduls (3) auf eine Gewindespindel (15) übertragbar ist, die in Eingriff mit einer an einem mittleren Gleitschlitten (12.2) vorgesehenen Spindelmutter steht, so dass damit eine Längsverschiebung des mittleren Gleitschlittens (12.2) entlang von Führungsstangen (14.1, 14.2) erzeugbar ist,
- die übrigen Gleitschlitten (12.1, 12.3) mit dem mittleren Gleitschlitten (12.2) über eine ebenfalls längsverschiebbare, an dem mittleren Gleitschlitten (12.2) mechanisch gekoppelte Führungskulisse (17) in Wirkverbindung stehen, so dass die übrigen Gleitschlitten (12.1, 12.3) ihrerseits mit dem mittleren Gleitschlitten (12.2) über die Führungskulisse (17) mechanisch gekoppelt sind, derart, dass damit gleichzeitig sowohl die Wählerkontakteinheiten (7.1...7.3) als auch die Vakuumschaltröhren (19.1...19.6) betätigbar sind.

3. Verteiltransformator nach einem der vorigen Ansprüche, wobei
- das Getriebemodul (3) ein flanschartiges Dichtmodul (5) umfasst.

4. Verteiltransformator nach einem der vorigen Ansprüche, wobei
- eine Trägerplatte (6) aus einem dielektrischen Material vorgesehen ist, an deren ersten Seite die mindestens eine Wählerkontakteinheit (7.1...7.3) und an der zweiten Seite die Vakuumschaltröhren (19.1...19.6) angeordnet sind.

5. Verteiltransformator nach einem der Ansprüche 2-4, Wobei
- die mindestens eine Wählerkontakteinheit (7.1...7.3) jeweils einen Gleitschlitten (12.1...12.3), einen Kontaktträger (10.1...10.3) sowie jeweils bewegliche Wählerkontakte (11.1, 11.2) umfasst, die mit mindestens einem festen Wählerkontakt (8.1...8.5) zusammenwirken.

6. Verteiltransformator nach einem der Ansprüche 2-5, wobei
- der Gleitschlitten (12.1...12.3) von jeweils zwei parallel angeordneten Führungsstangen (14.1, 14.2) aufgenommen wird, die ihrerseits mittels Traversen (13.1..13.3) an der Trägerplatte angeordnet sind.

7. Verteiltransformator nach einem der Ansprüche 4-6, wobei
- die beweglichen Wählerkontakte (11.1, 11.2) jeweils in einem Kontaktträger (10.1...10.3) aufgenommen werden und mit an der Trägerplatte (6) angeordneten festen Wählerkontakten (8.1...8.5) zusammenwirken.

8. Verteiltransformator nach einem der Ansprüche 2-7 , wobei
- die mindestens eine Wählerkontakteinheit (7.1...7.3) entlang der Führungsstangen (14.1, 14.2) mittels der jeweiligen Gleitschlitten (12.1...12.3) verschiebbar angeordnet ist, derart, dass damit der Regelbereich der Stufenregeleinrichtung (1) durchlaufen werden kann.

9. Verteiltransformator nach einem der Ansprüche 2-5 oder 7-8 und Anspruch 6, wobei
- die mehreren Traversen (13.1, 13.3) einen mechanischen Anschlag für die längs der Führungstangen (14.1, 14.2) verschiebbare mindestens eine Wählerkontakteinheit (7.1...7.3) bilden, derart, dass der Regelbereich des Laststufenschalters (1) mechanisch begrenzt ist.

10. Verteiltransformator nach einem der vorigen Ansprüche, wobei
- die beweglichen Wählerkontakte (11.1, 11.2) einer Phase in jeder stationären Betriebsstellung mindestens einen festen Wählerkontakt (8.1...8.5) derselben Phase des Laststufenschalters (1) beschalten.

11. Verteiltransformator nach einem der vorigen Ansprüche, wobei
- jeweils zwei bewegliche Wählerkontakte (11.1, 11.2) in einem Kontaktträger (10.1...10.3) federnd gelagert aufgenommen werden.

12. Verteiltransformator nach einem der Ansprüche 4-11, wobei
- der bewegliche Schaltkontakt (20.1...20.6) der entsprechenden Vakuumschaltröhre (19.1...19.6) jeweils mit einem Koppelglied (21.1...21.6) und einem Steuerhebel (22.1...22.6) gelenkig, mechanisch in Wirkverbindung steht, dass an der gelenkigen Verbindung zwischen dem entsprechenden Koppelglied (21.1...21.6) und dem Steuerhebel (22.1...22.6) auf der der Trägerplatte (6) zugewandten Seite eine Rolle (23.1...23.6) vorgehen ist, die sich partiell kontaktschlüssig an einer profilierten Oberseite (24) der Führungskulisse (17) entlangrollt, so dass die jeweilige Vakuumschaltröhre (19.1...19.6) durch eine Längsverschiebung der Führungskulisse (17) abhängig von der Profilierung deren Oberseite (24) beschaltbar ist.

13. Verteiltransformator nach einem der Ansprüche 4-12, wobei
- die festen Wählerkontakte (8.1...8.5) an einer Kontaktleiste (25.1...25.3) angeordnet sind, die ihrerseits jeweils mittels Abstandshaltern (27.1...27.3) an der Trägerplatte (6) befestigt sind.

14. Verteiltransformator nach dem vorigen Anspruch, wobei
- die Kontaktleiste (25.1... 25.3) an ihrer Längsseite eine Steuerkulisse (26.1...26.3) aufweist, an der beidseitig mehrerer Nocken angeordnet sind.

15. Verteiltransformator nach dem vorigen Anspruch, wobei
- die Kontur der Nocken so bemessen ist, dass die beweglichen Wählerkontakte (11.1, 11.2) der entsprechenden Wählerkontakteinheit (7.1...7.3) zwischen zwei benachbarten festen Wählerkontakten (8.1...8.5) von dem aktuell beschalteten festen Wählerkontakt abheben, nachdem die beweglichen Wählerkontakte (11.1, 11.2) nach vollzogener Umschaltung den nächsten festen Wählerkontakt wieder beschalten.

16. Verteiltransformator nach einem der vorigen Ansprüche und Anspruch 2, wobei
- pro Phase jeweils zwei Vakuumschaltröhren (19.1 und 19.2, 19.3 und 19.4, 19.5 und 19.6) direkt an dem entsprechenden Gleitschlitten (12.1... 12.3) der jeweiligen Wählerkontakteinheit (7.1...7.3) angeordnet sind,
- der Motorantrieb (4) mittels eines Winkelgetriebes (29) eine zentrale Gewindespindel (15) antreibt,
- jeder Gleitschlitten (12.1...12.3) eine separate Spindelmutter (16) aufweist,
- die Gewindespindel (15) mit der Spindelmutter (16) eines jeden Gleitschlittens (12.1...12.3) zusammenwirkt und die,Drehbewegung in eine synchrone Längsverschiebung der mehreren Gleitschlitten (12.1...12.3) umwandelbar ist, derart, dass dadurch sowohl die beweglichen Wählerkontakte (11.1, 11.2) als auch die Vakuumschaltröhren (19.1...19.6) betätigbar sind.

17. Verteiltransformator nach einem der vorigen Ansprüche, wobei
- der Motorantrieb (4) sowohl eine Gewindespindel (15) antreibt, die ihrerseits mit der Wählerkontakteinheit (7.1...7.3) in Wirkverbindung steht, als auch eine Nockenwelle (35), mittels der die Vakuumschaltröhren (19.1...19.6) betätigbar, derart, dass dadurch sowohl die beweglichen Wählerkontakte (11.1, 11.2) als auch die Vakuumschaltröhren (19.1... 19.6) betätigbar sind.

## Claims

1. Distributing transformer (40) for voltage regulation of local mains, comprising
- a main winding (43) and a regulating winding (44) with a plurality of winding taps,
- a step regulating device (1) for uninterrupted switching over between different winding taps of the regulating winding (44) of the distributing transformer (40),
- a transmission module (3),
- a motor drive (4) for introducing a drive movement into the step regulating device (1) by way of the transmission module (3) and
- two vacuum interrupters (19.1, 19.2 or 19.3, 19.4 or 19.5, 19.6) for uninterrupted switching over for each phase,
wherein
- at least one selector contact (7.1 ... 7.3) with a respective plurality of fixed selector contacts (8.1 ... 8.5) respectively electrically connected with the individual winding taps is arranged along a line,
- the fixed selector contacts (8.1 ... 8.5) are actuable by two longitudinally displaceable movable selector contacts (11.1, 11.2),
- the entire step regulating device (1) is arranged by means of the transmission module (3) at the underside of a transformer cover (2) and
- the at least one selector contact unit (7.1 ... 7.3) and the vacuum interrupters (19.1 ... 19.6) are so directly actuable by means of the common motor drive (4) that the introduction of the drive movement of the motor drive (4) into the at least one selector contact unit (7.1 ... 7.3) and the vacuum interrupters (19.1 ... 19.6) takes place without interposition of a mechanical energy store.

2. Distributing transformer according to the preceding claim, wherein
- a rotational movement generated by the motor drive (4) is transmissible by means of a transmission module (3) to a threaded spindle (15) engaged with a spindle nut provided at a centre slide carriage (12.2) so that a longitudinal displacement of the centre slide carriage (12.2) along guide rods (14.1, 14.2) can thereby be produced,
- the remaining slide carriages (12.1, 12.3) are operatively connected with the centre slide carriage (12.2) by way of a similarly longitudinally displaceable guide link, which is mechanically coupled with the centre slide carriage (12.2), so that the remaining slide carriages (12.1, 12.3) in turn are so mechanically coupled with the centre slide carriage (12.2) by way of the guide link (17) that not only the selector contact units (7.1 ... 7.3), but also the vacuum interrupters (19.1 ... 19.6) are thereby simultaneously actuable.

3. Distributing transformer according to any one of the preceding claims, wherein
- the transmission module (3) comprises a flange-like sealing module (5).

4. Distributing transformer according to any one of the preceding claims, wherein
- a support plate (6) of a dielectric material, at the first side of which the at least one selector contact unit (7.1 ... 7.3) and at the second side of which the vacuum interrupters (19.1 ... 19.6) are arranged, is provided.

5. Distributing transformer according to any one of claims 2 to 4, wherein
- the at least one selector contact unit (7.1 ... 7.3) comprises a respective slide carriage (12.1 ... 12.3), a respective contact carrier (10.1 ... 10.3) and respective movable selector contacts (11.1, 11.2) which co-operate with at least one fixed selector contact (8.1 ... 8.5).

6. Distributing transformer according to any one of claims 2 to 5, wherein
- the slide carriage (12.1 ... 12.3) is received by two parallelly arranged guide rods (14.1, 14.2) which are in turn arranged at the support plate by means of cross members (13.1 ... 13.3).

7. Distributing transformer according to any one of claims 4 to 6, wherein
- the movable selector contacts (11.1, 11.2) are each received in a contact carrier (10.1 ... 10.3) and co-operate with fixed selector contacts (8.1 ... 8.5) arranged at the support plate (6).

8. Distributing transformer according to any one of claims 2 to 7, wherein
- the at least one selector contact unit (7.1 ... 7.3) is arranged to be so displaceable along the guide rods (14.1, 14.2) by means of the respective slide carriage (12.1 ... 12.3) that it is thereby possible to run through the regulating range of the step regulating device (1).

9. Distributing transformer according to any one of claims 2 to 5, 7 or 8 and claim 6, wherein
- the plurality of cross-members (13.1, 13.3) forms a mechanical abutment for the at least one selector contact unit (7.1 ... 7.3), which is displaceable along the guide rods (14.1, 14.2), in such a way that the regulating range of the step regulating device (1) is mechanically limited.

10. Distributing transformer according to any one of the preceding claims, wherein
- the movable selector contacts (11.1, 11.2) of a phase in each stationary operational setting connect at least one fixed selector contact (8.1 ... 8.5) of the same phase of the step regulating device (1).

11. Distributing transformer according to any one of the preceding claims, wherein
- in each instance two movable selector contacts (11.1, 11.2) are received in a contact carrier (10.1 ... 10.3) to be resiliently mounted.

12. Distributing transformer according to any one of claims 4 to 11, wherein
- the movable switch contact (20.1 ... 20.6) of the corresponding vacuum interrupter (19.1 ... 19.6) is respectively pivotably and mechanically operatively connected with a coupling element (21.1 ... 21.6) and a control lever (22.1 ... 22.6), and provided at the pivotable connection between the corresponding coupling element (21.1 ... 21.6) and the control lever (22.1 ... 22.6) on the side facing the support plate (6) is a roller (23.1 ... 23.6) which rolls along a profiled upper side (24) of the guide link (17) under partially maintained contact so that the respective vacuum interrupter (19.1 ... 19.6) is connectible by a longitudinal displacement of the guide link (17) in dependence on the profiling of the upper side (24) thereof.

13. Distributing transformer according to any one of claims 4 to 12, wherein
- the fixed selector contacts (8.1 ... 8.5) are arranged at a contact strip (25.1 ... 25.3), which contact strips are in turn fastened to the carrier plate (6) by means of respective spacers (27.1 ... 27.3).

14. Distributing transformer according to any one of the preceding claims, wherein
- the contact strip (25.1 ... 25.3) has at its longitudinal side a control link (26.1 ... 26.3) at which several lobes are arranged on both sides.

15. Distributing transformer according to any one of the preceding claims, wherein
- the profile of the lobes is so dimensioned that the movable selector contacts (11.1, 11.2) of the corresponding selector contact unit (7.1 ... 7.3) between two adjacent fixed selector contacts (8.1 ... 8.5) lift off the currently connected fixed selector contact, since the movable selector contacts (11.1, 11.2) again connect the next fixed selector contact after switching over has been completed.

16. Distributing transformer according to any one of the preceding claims and claim 2, wherein
- two respective vacuum interrupters (19.1 and 19.2, 19.3 and 19.4, 19.5 and 19.6) per phase are directly arranged at the corresponding slide carriage (12.1 ... 12.3) of the respective selector contact unit (7.1 ... 7.3),
- the motor drive (4) drives a central threaded spindle (15) by means of an angle transmission (29)
- each slide carriage (12.1 ... 12.3) has a separate spindle nut (16) and
- the threaded spindle (15) co-operates with the spindle nut (16) of each slide carriage (12.1 ... 12.3) and the rotational movement can be converted into a synchronous longitudinal displacement of the plurality of slide carriages (12.1 ... 12.3) in such a manner that not only the movable selector contacts (11.1, 11.2), but also the vacuum interrupters (19.1 ... 19.6) are thereby actuable.

17. Distributing transformer according to any one of the preceding claims, wherein
- the motor drive (4) drives not only a threaded spindle (15), which in turn is operatively connected with the selector contact unit (7.1 ... 7.3), but also a camshaft (35), by way of which the vacuum interrupters (19.1 ... 19.6) are actuable, in such a manner that both the movable switching contacts (11.1, 11.2) and the vacuum interrupters (19.1 ... 19.6) are thereby actuable.

## Revendications

1. Transformateur de distribution (40) pour permettre la régulation de la tension de réseaux locaux comprenant :
- un enroulement principal (43) et un enroulement de réglage (44) comportant plusieurs prises d'enroulement,
- un dispositif de réglage à gradins (1) pour permettre une commutation sans interruption entre différentes prises d'enroulement de l'enroulement de réglage (44) du transformateur de distribution (40),
- un module de transmission (3),
- un entraînement motorisé (4) permettant de déclencher un mouvement d'entraînement dans le dispositif de réglage à gradins (1) par l'intermédiaire du module de transmission (3),
- deux tubes de commutation à vide (19.1, 19.2 ou 19.3, 19.4 ou 19.5, 19.6) pour chaque phase de façon à permettre une commutation sans interruption,
- transformateur de distribution dans lequel :
- au moins une unité de contacts de sélecteur (7.1...7.3) ayant respectivement plusieurs contacts de sélecteur fixes (8.1...8.5) qui sont respectivement en contact électrique avec les différentes prises d'enroulement est montée le long d'une ligne,
- les contacts de sélecteur fixes (8.1...8.5) peuvent être actionnés par deux contacts de sélecteur mobiles (11.1, 11.2) susceptibles de coulisser longitudinalement,
- la totalité du dispositif de réglage à gradins (1) est montée au moyen du module de transmission (3) sur la face inférieure d'un couvercle de transformateur (2),
- l'unité de contacts de sélecteur (7.1...7.3) et les tubes de commutation à vide (19.1... 19.6) peuvent être directement actionnés au moyen de l'entraînement motorisé commun (4) de sorte que le déclenchement du mouvement d'entraînement de l'entraînement motorisé (4) sur l'unité de contacts de sélecteur (7.1...7.3) et les tubes de commutation à vide (19.1...19.6) s'effectue sans interposition d'un accumulateur d'énergie mécanique.

2. Transformateur de distribution conforme à la revendication précédente,
dans lequel :
- le mouvement de rotation produit par l'entraînement motorisé (4) peut être transmis au moyen d'un module de transmission (3) à une broche filetée (15) qui est en prise avec un écrou de broche situé sur un chariot à glissière médian (12.2) de sorte que l'on puisse ainsi obtenir un coulissement longitudinal du chariot à glissière médian (12.2) le long de tiges de guidage (14.1, 14.2),
- les autres chariots à glissière (12.1, 12.3) sont en liaison fonctionnelle avec le chariot à glissière médian (12.2) par l'intermédiaire d'une coulisse de guidage (17) également mobile en coulissement longitudinal mécaniquement couplée au chariot à glissière médian (12.2) de sorte que les autres chariots à glissière (12.1, 12.3) soient de leur côté, couplés mécaniquement au chariot à glissière médian (12.2) par l'intermédiaire de la coulisse de guidage (17) de façon à pouvoir ainsi actionner simultanément les unités de contacts de sélecteur (7.1...7.3) et également les tubes de commutation à vide (19.1...19.6).

3. Transformateur de distribution conforme à la revendication précédente,
dans lequel le module de transmission (3) comprend un module d'étanchéité (5) en forme de bride.

4. Transformateur de distribution conforme à la revendication précédente,
**caractérisé en ce qu'**
il est prévu une plaque support (6) en un matériau diélectrique sur une première face de laquelle est montée l'unité de contacts de sélecteur (7.1...7.3) et sur la seconde face de laquelle sont montés les tubes de commutation à vide (19.1...19.6).

5. Transformateur de distribution conforme à l'une des revendications 2 à 4,
dans lequel l'unité de contacts de sélecteur (7.1...7.3) comprends respectivement un chariot à glissière (12.1...12.3), un support de contacts (10.1...10.3) ainsi que des contacts de sélecteur mobiles (11.1, 11.2) qui coopèrent avec au moins un contact de sélecteur fixe (8.1...8.5).

6. Transformateur de distribution conforme à l'une des revendications 2 à 5,
dans lequel les chariots à glissière (12.1...12.3) sont respectivement reçus par deux tiges de guidage (14.1, 14.2) parallèles qui sont de leur côté montées sur la plaque support au moyen de traverses (13.1...13.3).

7. Transformateur de distribution conforme à l'une des revendications 4 à 6,
dans lequel les contacts de sélecteur mobiles (11.1, 11.2) sont respectivement logés dans un support de contact (10.1...10.3) et coopèrent avec des contacts de sélecteur fixes (8.1...8.5) montés sur la plaque support (6).

8. Transformateur de distribution conforme à l'une des revendications 2 à 7,
dans lequel l'unité de contacts de sélecteur (7.1...7.3) est montée coulissante le long des tiges de guidage (14.1, 14.2) au moyen des chariots à glissière (12.1...12.3) respectifs de sorte qu'ainsi, la plage de réglage du dispositif de réglage à gradins (1) puisse être parcourue.

9. Transformateur de distribution conforme à l'une des revendications 2 à 5 ou 7 et 8 et à la revendication 6,
dans lequel les traverses (13.1...13.3) forment une butée mécanique pour l'unité de contacts de sélecteur (7.1...7.3) mobile en coulissement le long des tiges de guidage (14.1, 14.2) de sorte que la plage de réglage du commutateur à gradins de charge (1) soit mécaniquement limitée.

10. Transformateur de distribution conforme à l'une des revendications précédentes,
dans lequel les contacts de sélecteur mobiles (11.1, 11.2) d'une phase branchent, dans chaque position de fonctionnement stationnaire au moins un contact de sélecteur fixe (8.1...8.5) de la même phase du commutateur à gradins de charge (1).

11. Transformateur de distribution conforme à l'une des revendications précédentes,
dans lequel deux contacts de sélecteur mobiles respectifs (11.1, 11.2) sont logés élastiquement dans un support de contacts (10.1...10.3).

12. Transformateur de distribution conforme à l'une des revendications 4 à 11,
dans lequel le contact de commutation mobile (20.1...20.6) des tubes de commutation à vide (19.1...19.6) correspondants est mécaniquement en liaison fonctionnelle respectivement en étant articulé avec un organe d'accouplement (21.1...21.6) et un levier de commande (22.1...22.6), et sur l'articulation entre l'organe d'accouplement (21.1...21.6) correspondant et le levier de commande (22.1...22.6) il est prévu, sur la face tournée vers la plaque support (6) un galet (23.1...23.6) qui roule avec une liaison par contact partielle sur une face supérieure profilée (24) de la coulisse de guidage (17) de sorte que chaque tube de commutation à vide (19.1...19.6) puisse être branché par un coulissement longitudinal de la coulisse de guidage (17) en fonction du profilage de la face supérieure (24) de celle-ci.

13. Transformateur de distribution conforme à l'une des revendications 4 à 12,
dans lequel les contacts de sélecteur fixes (8.1...8.5) sont respectivement situés sur une réglette de contact (25.1...25.3) respectivement fixée sur la plaque support (6) au moyen d'éléments d'écartement (27.1...27.3).

14. Transformateur de distribution conforme à l'une des revendications précédentes,
dans lequel la réglette de contact (25.1...25.3) comporte sur sa face longitudinale, une coulisse de commande (26.1...26.3) sur laquelle sont montées de part et d'autres plusieurs cames.

15. Transformateur de distribution conforme à la revendication précédente,
dans lequel le contour des cames est dimensionné de sorte que les contacts de sélecteur mobiles (11.1...11.2) de l'unité de contacts de sélecteur (7.1...7.3) correspondante situés entre deux contacts de sélecteur fixes (8.1...8.5) voisins se détachent du contact de sélecteur fixe actuellement branché après que les contacts de sélecteur mobiles (11.1...11.2) branchent à nouveau le contact de sélecteur fixe suivant, après commutation complète.

16. Transformateur de distribution conforme à l'une des revendications précédentes et à la revendication 2,
dans lequel :
- pour chaque phase deux tubes de commutation à vide (19.1 et 19.2 ; 19.3 et 19.4 et 19.5 et 19.6) respectifs sont directement situés sur le chariot à glissière (12.1...12.3) correspondant de l'unité de contacts de sélecteur (7.1...7.3) respective,
- l'entraînement motorisé (4) entraîne une broche filetée centrale (15) au moyen d'une transmission d'angle (29),
- chaque chariot à glissière (12.1...12.3) comporte un écrou de broche (16) séparé,
- la broche filetée (15) coopère avec l'écrou de broche (16) d'un chariot à glissière (12.1...12.3) respectif, et le mouvement de rotation peut être transformé en un coulissement longitudinal synchrone des chariots à glissière (12.1...12.3) de façon à pouvoir actionner ainsi les contacts de sélecteur mobiles (11.1, 11.2) et également les tubes de commutation à vide (19.1... 19.6).

17. Transformateur de distribution conforme à l'une des revendications précédentes,
dans lequel l'entraînement motorisé (4) entraîne une broche filetée (15) qui est, en liaison fonctionnelle avec l'unité de contacts de sélecteur (7.1...7.3), ainsi qu'un arbre à came (35) au moyen duquel les tubes de commutation à vide (19.1...19.6) peuvent être actionnés de sorte qu'ainsi les contacts de sélecteur mobiles (11.1, 1.2) et également les tubes de commutation à vide (19.1...19.6) puissent être actionnés.
